# EUROPEAN PATENT SPECIFICATION

(11) **EP 2 642 184 B1**
(45) Date of publication and mention of the grant of the patent: **03.05.2017**
(21) Application number: 12160881.4
(22) Date of filing: 22.03.2012
(51) Int. Cl.: F21S 8/08, F21S 9/03, F21V 15/00, F21V 21/10, F21V 21/38, F21V 23/00, F21V 21/15, F21W 131/10, F21Y 115/10

(54) **ILLUMINATION POST WITH A HIGH-SECURITY CONCEALMENT BASE HOUSING UNIT HAVING IMPROVED PROTECTION**
BELEUCHTUNGSPFOSTEN MIT VERBORGENER HOCHSICHERHEITSGEHÄUSEEINHEIT IM UNTERTEIL MIT VERBESSERTEM SCHUTZ
POTEAU D'ÉCLAIRAGE DOTÉ D'UNE UNITÉ DE BOÎTIER DE BASE À DISSIMULATION DE HAUTE SÉCURITÉ PRÉSENTANT UNE PROTECTION AMÉLIORÉE

(43) Date of publication of application: 25.09.2013
(73) Proprietor: Kösedag Tel Örme Sanayi Ve Ticaret Ithalat Ihracat A.S., 34940 Istanbul (TR)
(72) Inventor: Kösedag, Ali, 34390 Istanbul (TR)
(74) Representative: Sevinç, Erkan

(56) References cited:
- EP-A1- 2 312 090
- WO-A2-2011/115418
- CN-U- 202 056 709
- DE-U1- 20 000 688
- DE-U1-202010 008 193
- FR-A1- 2 592 461
- JP-A- 2011 210 483
- TW-A- 201 104 147
- US-A1- 2010 220 467

## Description

### Technical Field of the Invention

The present invention relates to a post solar power illumination means adapted to be mounted on posts erected around an area, e.g. a residential area. In particular, the present invention relates to a post solar unit having solar energy storage means with a high security base unit having concealment function.

### Background of the Invention

US 2010/220467 A1 discloses an apparatus for providing power to an illumination device including power produced by a wind turbine and a solar array. The wind turbine may be a vertically oriented curved turbine and the solar array may be a single or a plurality of solar panels. The illumination device, wind turbine and solar array may be employed as a substitute for commercially powered street lights and related devices.

The present invention concerns an outdoor lighting fixture as defined in the preamble to Claim 1.

In the art outdoor lighting fixtures especially used in lighting road and courtyard areas with a light fixture pillar, or post, anchored in the ground are well known. A light fixture of this type is fed through the general electricity distribution network.

It is a particular object of the invention to disclose an outdoor lighting fixture which can be installed with ease and in a simple way virtually anywhere and which can operate apart from the general distribution network.

The outdoor lighting fixture of the invention is characterized by that which is stated in Claim 1.

As taught by the invention, the outdoor lighting fixture comprises a storage battery installed inside the lighting fixture.

A plurality of patents/patent applications are present in the field in relation to posts and to their configuration with regards to fixing of posts and/or fences and fittings thereof.

The advantage of the system according to the present invention lies in that the proposed post solar units impart an improved performance to illuminating posts such that they are equipped with solar panels in the form of a compact post solar unit having a solar panel embedded within a solar panel housing.

The present invention also ensures easier repair of the post solar units by maintenance workers such that maintenance and repair operations are substantially accelerated.

The present invention provides that a base unit is utilized as a battery housing, said electrical battery concealed in said base unit and locked therein. Further, it is envisaged that a base unit is also advantageous in that it provides concealment of mechanical fastening means such as anchoring means and all other bearings such as screws, nuts and bolts in a very efficient manner.

Said base unit part also provides protection of movable elements of the system in the form of a housing. This protective effect also extends to absorption of impacts by casual intruders and waterproofing of the inner elements within said base unit.

The post of the invention is extremely useful in emergency cases such as earthquake rescue operations where no mains power is available or use thereof is avoided as said base unit can be displaced by means of base wheels according to another embodiment of the invention where a movable post is provided instead of a stationarily anchored post.

### Objects of the Invention

One of the objects of the present invention is to provide a post solar unit which incorporates a solar panel in association with a battery.

Another object of the present invention is to provide a post solar unit where a more efficient use of power accumulated by the solar panel within said solar units is achieved.

Another object of the present invention is to provide a mobile illumination post which incorporates a battery to enable powering of electrical means for lowering a framework comprising solar units, therefore substantially facilitating repair of the post solar units by maintenance workers.

### Summary of the Invention

The present invention provides a post solar unit suitable for mounting on a hollow tubular post body having longitudinal channels extending so as to define and delimit a longitudinal space.

Said elements are powered by a solar panel within said solar unit. Further, an electrical battery is provided in association with said solar panel. Said battery is conveniently provided within the solar unit.

The components of the post solar unit consist of a solar unit frame onto which a sealing element is secured by means of a grooved rim. Said solar unit frame is rotatable around its base such that said solar panel's inclined outer surface can be positioned to face a certain desired direction.

The present invention provides a post with at least one longitudinal channel accommodating a movable block with rollers. Said movable blocks displace in said longitudinal channels in order for raising and lowering said solar units relative to the ground surface on which said posts are erected. This is achieved by means of an electrical motor whose rotary shaft is conventionally coupled to a pulley mechanism in communication with a wire, the latter carrying said movable block.

The present invention provides that a base unit is utilized as a battery housing, said electrical battery concealed in said base unit and locked therein. Said battery is used in powering said electrical motor driving said pulley mechanism.

### Brief Description of the Figures

The figures whose brief explanations are herewith provided are solely intended for providing a better understanding of the present invention and are as such not intended to define the scope of protection or the context in which said scope is interpreted in the absence of the present description.
Fig. 1a demonstrates a general perspective view of the post profile according to the present invention.
Fig. 1b demonstrates a cross-sectional view of the post profile according to the present invention.

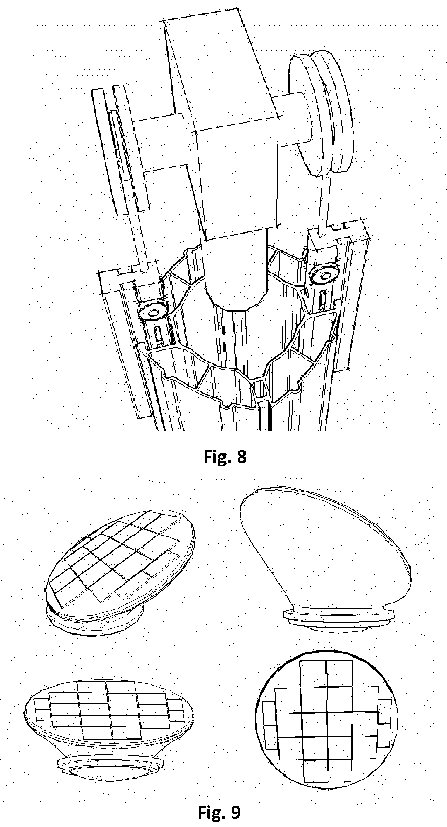

Fig. 2 and Fig. 8 demonstrate perspective views of the post profile with the illumination means lifting mechanism according to the present invention.

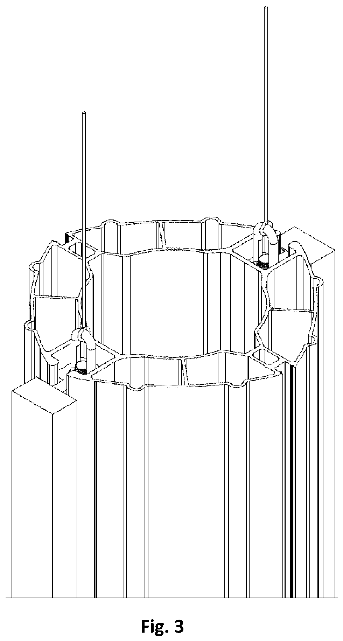

Fig. 3 demonstrates another perspective view of the post profile while the illumination means lifting mechanism rollers are within the profile according to the present invention.

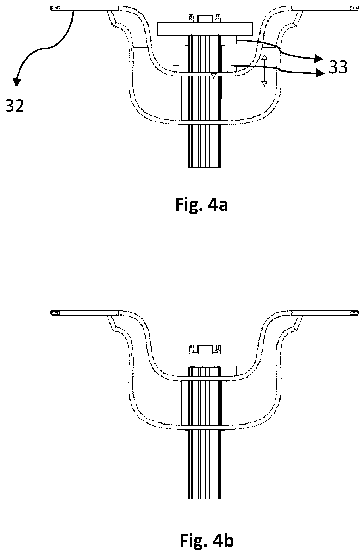

Fig. 4a and 4b respectively demonstrates planar views of the positions before and after the illumination means framework reaches its operational position according to the present invention. Fig. 10a demonstrates a perspective view of an alternative design of said illumination means framework according to the present invention.

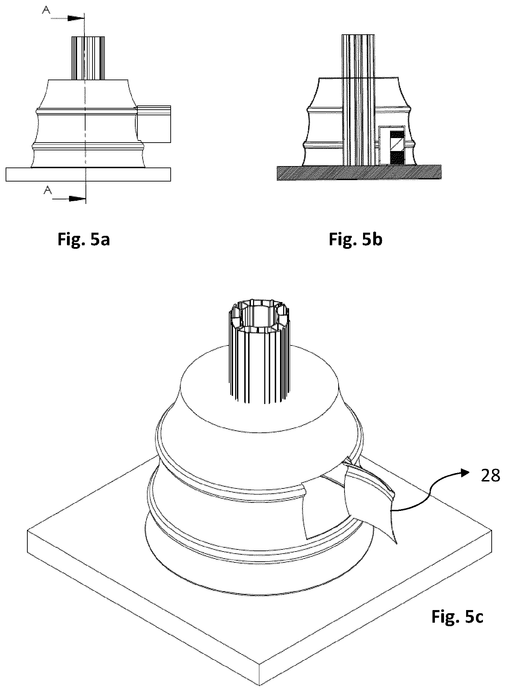

Fig. 5a demonstrates a planar view of the base unit according to the present invention. Fig. 5b demonstrates a cross-sectional view taken along the A-A line as indicated in Fig. 5a. Fig. 5c demonstrates a perspective view of the base unit according to the present invention.
Fig. 6 demonstrates an exploded view of the post solar unit according to the present invention and Fig. 9 demonstrates an alternative embodiment of the solar unit housing.
Fig. 7a demonstrates an perspective view of an erected operable post according to the present invention. Fig. 7b demonstrates a longitudinal cross-sectional view of the post indicating dome-shaped caps according to the present invention.
Fig. 8 demonstrates an perspective view of the pulley mechanism according to the present invention.
Fig. 9 demonstrates perspective views of a solar panel unit according to the present invention.
Fig. 10a demonstrates a perspective view of the post according to the present invention.
Fig. 11 demonstrates an exploded perspective view of the base unit components according to certain aspects of the present invention.
Fig. 12 demonstrates a general perspective view of the base unit according to certain aspects of the present invention.
Fig. 13a and 13b respectively demonstrates the base unit according to certain aspects of the present invention with and without a central flange portion.
Fig. 14 demonstrates water discharge path of the base unit according to certain aspects of the present invention.

### Detailed Description of the Invention

Referring now to the figures outlined above, the present invention provides a post (11) with a solar panel unit (12) disposed as explained hereinafter.

The present invention concerns an outdoor lighting fixture as defined in the preamble to Claim 1 whereby an outdoor lighting fixture especially used in lighting road and courtyard areas is achieved in the form of a light fixture pillar, or post, either anchored in the ground or provided with wheels to enable easy displacement.

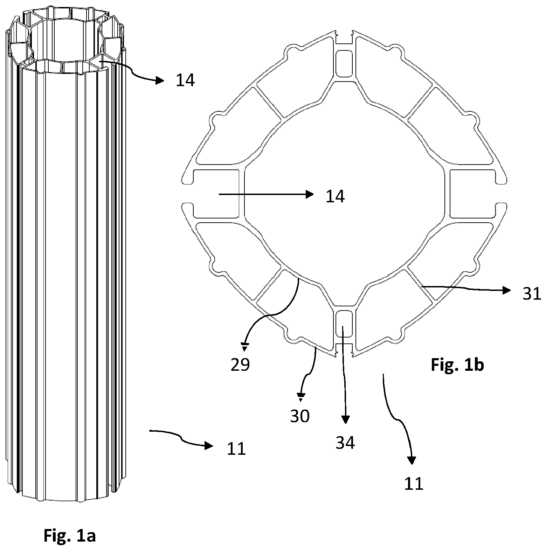

Said outdoor lighting post (11) is shaped to have a longitudinally hollow profile (29) with a circular-like cross-section in the form of an inner profile. The longitudinally hollow profile (29) of the outdoor lighting post (11) has cavities (34) on its lateral surfaces for incorporating LED elements. As might be seen on Fig. 1b, the LED elements may be provided 180 degrees apart on the lateral surfaces of said post (11). Said longitudinal cavities (34) receiving said LED elements are closed by longitudinal coverings providing a dovetail connection with the open end of said cavities (34). Said coverings provide the effect that said LED elements are protected against environmental factors such as humidity and rainy weather conditions. Further, said coverings when mounted, providing a flush communication with the remaining outer surface of the post (11) provides both a more aesthetical and a concealed or at least less noticeable configuration to a casual intruder. Said coverings are made out of polycarbonate for maximum security. This is especially advantageous against intrusion attempts using a sharp object such as a screwdriver for damaging the LED elements.

The post (11) of the present invention is provided such that it features a double profile post (11) in which an outer profile (30) is connected to said longitudinally hollow profile (29) by means of a plurality of preferably symmetrically arranged bridges (31). To this end, said post (11) features a first closed geometry longitudinally hollow profile (29) interconnected by bridging elements (31) to a second closed geometry longitudinally extending profile (30) enclosing said longitudinally hollow profile (29).

Said solar unit (12) is shaped and dimensioned to be mounted on a carrier framework (13) with holder slots (32) receiving said solar units (12), typically serving to the purpose of supporting the same.

The solar unit (12) according to the present invention is adapted to be mounted on a post (11) with at least one longitudinal channel (14), said channels (14) accommodating a movable block (15) having rollers (16). Said movable blocks (15) displace in said longitudinal channels (14) in order for raising and lowering said solar units (12) relative to the ground surface on which said posts (11) are erected. This is achieved by means of an electrical motor (17) whose rotary shaft is conventionally coupled to a pulley (18) mechanism in communication with a wire (19), the latter carrying said movable block (15).

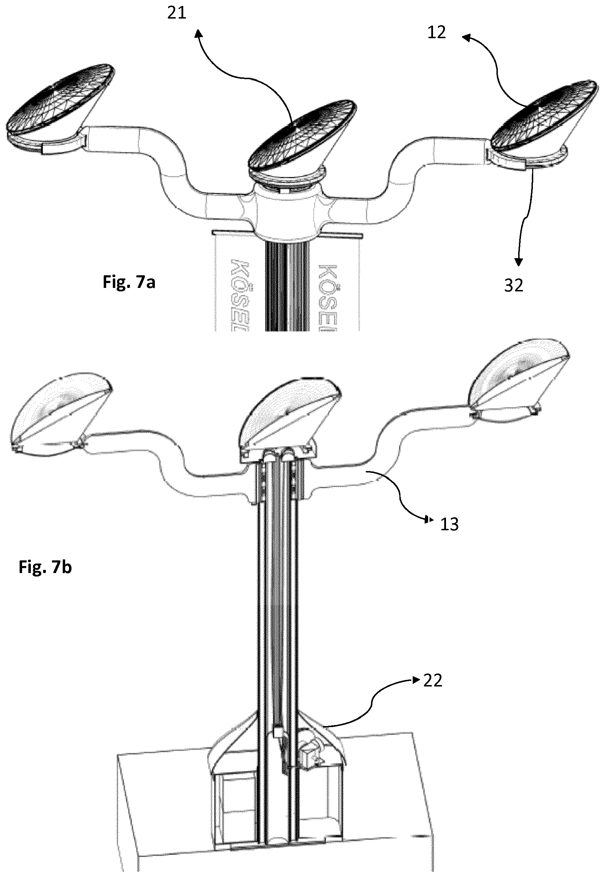

The solar units (12) are provided at both sides of the post (11) as indicated in Fig. 7. Said carrier framework (13) being in association with said movable blocks (15) therefore provides that said solar units (12) mounted on said framework (13) are lowered by means of said electrical motor (17), for instance for maintenance purposes.

The illumination means according to the invention are LEDs (light emitting diodes) embedded within a central housing (21) above the electrical motor (17). Said illumination means may be separately provided on said carrier framework (13).

Said electrical motor (17) is powered by a base battery embedded within said base unit (22). Said motor's (17) power leads extend to the base unit (22) of said post (11) through its central hollow space, i.e. the longitudinally hollow profile (29). To this end, said motor (17) is continuously connected to said base battery. Said motor (17) may also be remotely actuated by signals from a suitable radio transmitter as is conventionally practiced in the available art. Upon termination of routine maintenance or repair, said motor (17) is reactuated to reposition said framework (13) to its initial position. Said motor's base battery connection is not affected by moving parts of the mechanism, i.e. the displacement of said framework (13). The initial position of the same is easily detected by microswitches (33) upon which said lighting means in said central housing (21) are powered by said solar units (12).

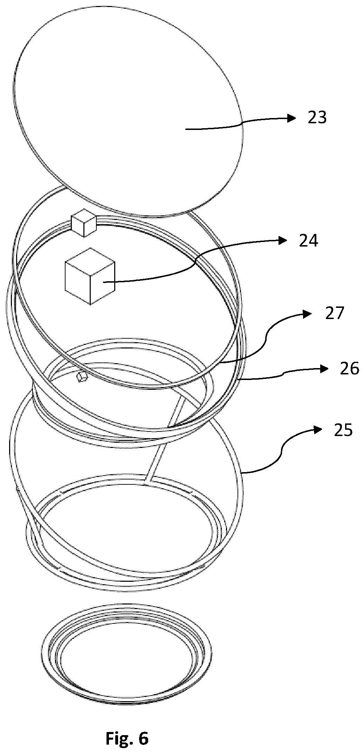

The present invention provides a compact solar energy station such that said illuminating elements in said central housing (21) are powered by a solar panel (23) as shown in Fig. 6. Said solar panel (23) is in electrical communication with a rechargeable electrical battery (24, symbolically shown in Fig. 6). To this end, a post (11) is conveniently provided with a carrier framework (13) having solar units (12) and a central housing embedding an electrical motor (17) and illumination means.

Fig. 6 according to the present invention demonstrates the main components of the post (13) solar unit (12) where said solar panel (23) is maintained within a solar unit frame (25) onto which a sealing element (27) is secured by means of a grooved rim (26). Said solar unit frame (25) is rotatable around its base such that said solar panel's (23) inclined outer surface can be positioned to face a certain desired direction.

The base unit (22) according to the present invention provides a further security feature such that the post (11) anchors securing the same to the ground are concealed by a base unit (22). Said base unit comprises a lockable lid (28) which prevents intruders from reaching the anchors. It is to be noted that it is not entirely uncommon that intruders intend to steal posts.

In a nutshell, the present invention proposes a base unit (22) utilized as a battery housing, said electrical battery being concealed in said base unit (22) in lockable manner. Said battery is used in powering said electrical motor (17) driving said pulley mechanism (18).

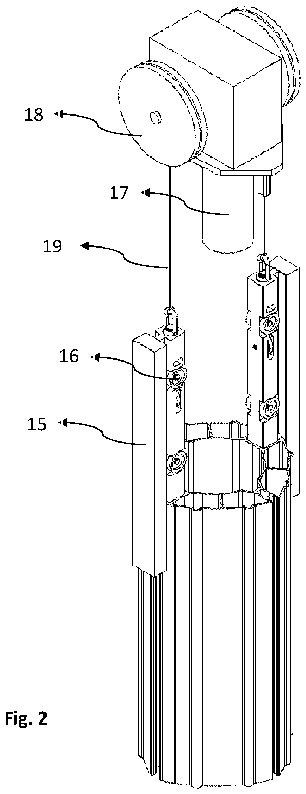

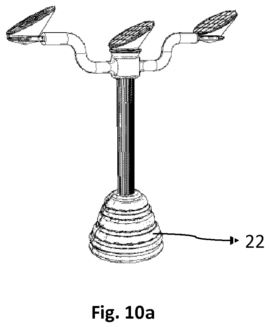

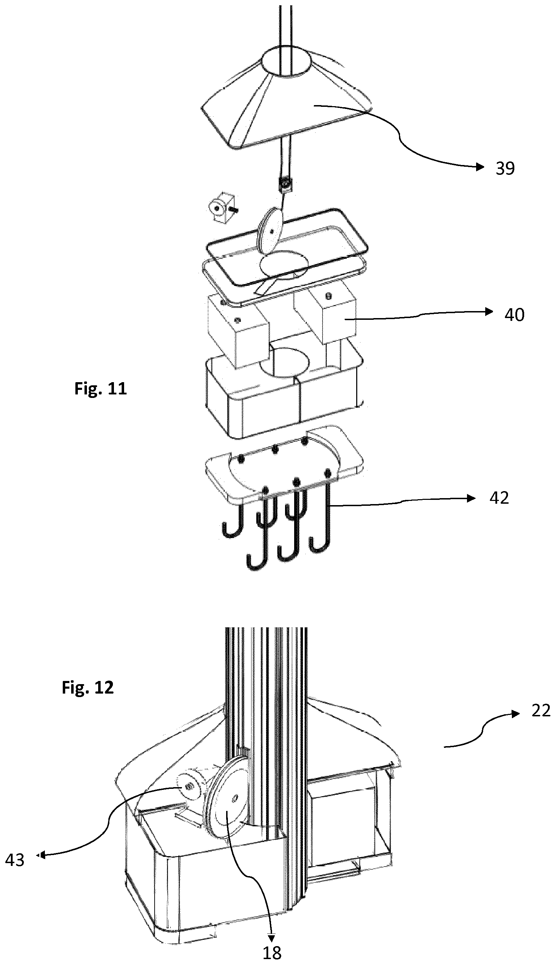

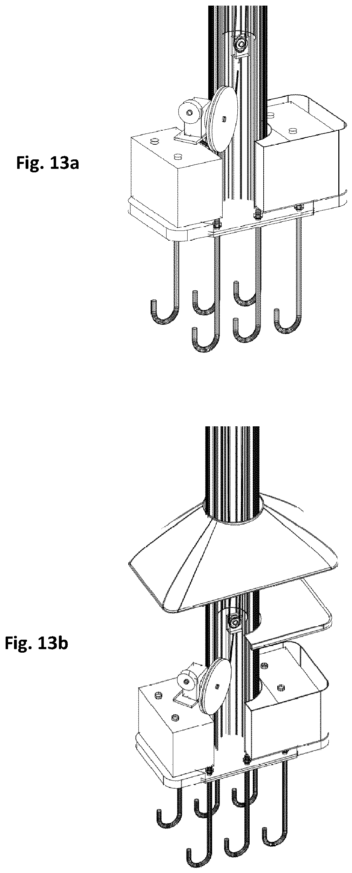

The figures 11 to 14 demonstrate an alternative base unit (22) embodiment different than that shown in Fig. 10a in terms of physical structure. The base unit (22) embodiment of Fig. 11 comprises a central flange portion (39) annularly encircling said post (11) body above said base unit (22), an inner housing receiving at least one electrical battery (40) and anchoring means (42) for ground fixation. In an alternative embodiment not covered by the present invention as defined by the claims, the post (11) may comprise a manual drive coupling (43) in said base unit (22) for operating said pulley mechanism (18). Said manual drive coupling (43) may be operated by means of a conventional drilling tool in the possession of maintenance and repair workers such that said pulley mechanism (18) installed within said base unit (22) instead of being coupled to the shaft of said electrical motor (17) as in the embodiment of Fig. 2 according to the present invention is operated.

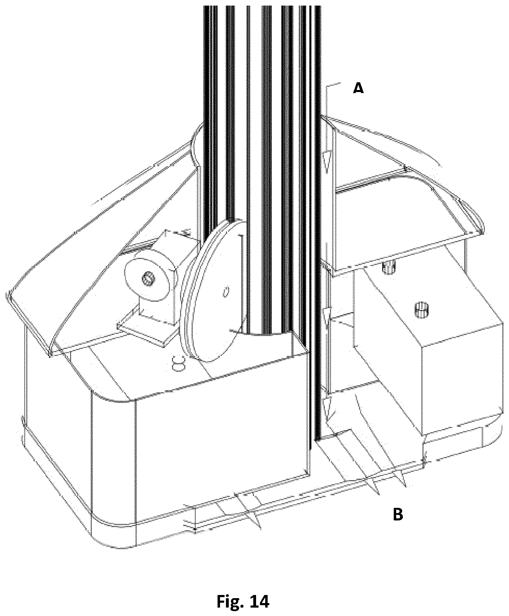

The base unit (22) of the invention provides a water discharge path A-B within said base (22) as shown by respective arrows in Fig. 14. Water penetrating into said base unit (22) through annular openings in between the post (11) body and said central flange portion (39) advances parallel to the post (11) body and is discharged from lateral openings on the ground.

## Claims

1. A post (11) having a longitudinally hollow profile (29) and comprising a base unit (22), at least one lighting means and a carrier framework (13) having one or more holder slots (32) for receiving at least one solar unit (12) having a solar panel (23) and a rechargeable battery (24), said solar panel (23) being in electrical communication with said rechargeable battery (24) and being maintained within a solar unit frame (25), said solar unit frame (25) being seated in one of said one or more holder slots (32), said at least one lighting means being powered by said rechargeable battery (24) wherein said base unit (22) is lockable and comprises an electrical battery (40) **characterized in that**
said post (11) comprises an electrical motor (17) which has a shaft driving said carrier framework (13) and which is powered by said electrical battery (40), and
said post (11) further comprises at least one longitudinal channel (14) accommodating a movable block (15) displaceable in said longitudinal channel (14) by means of said electrical motor (17), said movable block (15) being fixedly joined to said carrier framework (13).

2. A post (11) as set forth in Claim 1 wherein the post (11) is further equipped with a pulley (18) mechanism in communication with a wire (19), the latter carrying said movable block (15).

3. A post (11) as set forth in Claim 1 wherein said motor's (17) power leads extend to said base unit (22) of said post (11) through its longitudinally hollow profile (29).

4. A post (11) as set forth in Claim 1, 2 or 3 wherein said motor (17) is remotely actuatable by signals from a radio transmitter.

5. A post (11) as set forth in Claim 1 wherein said base unit (22) comprises a central flange portion (39) annularly encircling said post (11) body above said base unit (22), an inner housing (41) receiving said electrical battery (40) and anchoring means (42) for ground fixation.

6. A post (11) as set forth in Claim 1 wherein said solar unit frame (25) is rotatable around its base in the holder slot (32) in which said said solar unit frame (25) is seated, such that said solar panel's (23) inclined outer surface is positionable to face a certain direction.

7. A post (11) as set forth in Claim 2 wherein said longitudinally hollow profile (29) features a closed geometry in which said electrical motor (17) is stationarily installed such that a central housing (21) located immediately above said longitudinally hollow profile (29) contains said pulley (18) mechanism.

8. A post (11) as set forth in Claim 7 wherein said lighting means are LEDs embedded within said central housing (21).

9. A post (11) as set forth in Claim 5 wherein said anchoring means (42) of said post (11) for securing the same are concealed by said base unit (22), said base unit (22) comprising a lockable lid (28) which prevents intruders from having said anchoring means (42) in sight.

10. A post (11) as set forth in Claim 1 wherein said base unit (22) is provided with castors to enable easy displacement.

## Patentansprüche

1. Ein Pfosten (11), welcher ein longitudinal hohles Profil (29) aufweist, und welcher umfasst:
eine Basiseinheit (22), zumindest ein Beleuchtungsmittel und eine Trägerstruktur (13), welche ein oder mehrere Halte-Aussparungen (32) zum Aufnehmen zumindest einer Solareinheit (12) aufweist, welche ein Solarpanel (23) und eine wiederaufladbare Batterie (24) aufweist, wobei das Solarpanel (23) mit der wiederaufladbaren Batterie (24) elektrisch verbunden ist, und in einer Solareinheit-Struktur (25) enthalten ist, wobei die genannte Solareinheit-Struktur (25) in einem der ein oder mehreren Halte-Aussparungen (32) befestigt ist, wobei das zumindest eine Beleuchtungsmittel von der wiederaufladbaren Batterie (24) versorgt wird, wobei die Basiseinheit (22) verriegelbar ist und eine elektrische Batterie (40) umfasst,
**dadurch gekennzeichnet, dass**
der Pfosten (11) einen elektrischen Motor (17) umfasst, welcher eine Welle aufweist, welche die genannte Trägerstruktur (13) antreibt, und welche von der elektrischen Batterie (40) versorgt wird,
und wobei der Pfosten (11) ferner zumindest einen Längskanal (14) aufweist, welcher einen in dem Längskanal (14) mittels des elektrischen Motors (17) verschiebbaren bewegbaren Block (15) aufnimmt, wobei der bewegbare Block (15) mit der Trägerstruktur (13) fest verbunden ist.

2. Ein Pfosten (11) gemäß Anspruch 1, wobei der Pfosten (11) ferner mit einem Seilscheiben(18)- Mechanismus in Verbindung mit einem Draht (19) versehen ist, wobei letzterer den bewegbaren Block (15) trägt.

3. Ein Pfosten (11) gemäß Anspruch 1, wobei die Versorgungsleitungen des Motors (17) sich zu der Basiseinheit (22) des Pfostens (11) durch sein longitudinales Hohlprofil erstrecken.

4. Ein Pfosten (11) gemäß einem der Ansprüche 1, 2 oder 3, wobei der Motor (17) mittels Signalen von einem Funksender fernbedienbar ist.

5. Ein Pfosten (11) gemäß Anspruch 1, wobei die Basiseinheit (22) einen den Körper des Pfostens (11) oberhalb der Basiseinheit (22) ringförmig umgebenden zentralen FlanschAbschnitt (39) umfasst, wobei ein Innengehäuse (41) die elektrische Batterie (40) und Verankerungs-Mittel (42) zur Boden-Befestigung aufnimmt.

6. Ein Pfosten (11) gemäß Anspruch 1, wobei die Solareinheit-Struktur (25) um ihre Basis in der Halte-Aussparung (32) rotierbar ist, in welchem die Solareinheit-Struktur (25) befestigt ist, so dass die geneigte Außenfläche des Solarpanels (23) derart positionierbar ist, dass sie in eine bestimmte Richtung ausgerichtet ist.

7. Ein Pfosten (11) gemäß Anspruch 2, wobei das longitudinal hohle Profil (29) eine geschlossene Geometrie darstellt, in welcher der elektrische Motor (17) derart stationär installiert ist, dass ein unmittelbar oberhalb des longitudinal hohlen Profils (29) angeordnetes Zentral-Gehäuse (21) den Seilscheiben(18)- Mechanismus enthält.

8. Ein Pfosten (11) gemäß Anspruch 7, wobei die Beleuchtungs-Mittel innerhalb des Zentralgehäuses (21) eingebettete LED's sind.

9. Ein Pfosten (11) gemäß Anspruch 5, wobei die zum Befestigen desselben vorgesehenen Verankerungs-Mittel (42) des Pfostens (11) von der Basiseinheit (22) verdeckt sind, wobei die Basiseinheit (22) einen verriegelbaren Deckel (28) umfasst, welcher Eindringlinge daran hindert, die Verankerungsmittel (42) einzusehen.

10. Ein Pfosten (11) gemäß Anspruch 1, wobei die Basiseinheit (22) mit Rollen versehen ist, um einfaches Verschieben zu ermöglichen.

## Revendications

1. Montant (11) ayant un profilé longitudinalement creux (29) et comprenant une unité de base (22), au moins un moyen d'éclairage et une ossature porteuse (13) comportant une ou plusieurs fentes de soutien (32) destinées à recevoir au moins une unité solaire (12) comportant un panneau solaire (23) et une batterie rechargeable (24), ledit panneau solaire (23) étant en communication électrique avec ladite batterie rechargeable (24) et étant maintenu au sein d'un cadre d'unité solaire (25), ledit cadre d'unité solaire (25) étant logé dans l'une desdites une ou plusieurs fentes de soutien (32), ledit au moins un moyen d'éclairage étant alimenté par ladite batterie rechargeable (24), dans lequel ladite unité de base (22) est verrouillable et comprend une batterie électrique (40),
**caractérisé en ce que**
ledit montant (11) comprend un moteur électrique (17) qui comporte un arbre entraînant ladite ossature porteuse (13) et qui est alimenté par ladite batterie électrique (40), et
ledit montant (11) comprend en outre au moins un canal longitudinal (14) accueillant un bloc mobile (15) déplaçable dans ledit canal longitudinal (14) au moyen dudit moteur électrique (17), ledit bloc mobile (15) étant joint fixement à ladite ossature porteuse (13).

2. Montant (11) selon la revendication 1, dans lequel le montant (11) est en outre équipé d'un mécanisme de poulie (18) en communication avec un fil (19), ce dernier portant ledit bloc mobile (15).

3. Montant (11) selon la revendication 1, dans lequel des fils d'alimentation dudit moteur (17) s'étendent vers ladite unité de base (22) dudit montant (11) à travers son profilé longitudinalement creux (29).

4. Montant (11) selon la revendication 1, 2 ou 3, dans lequel ledit moteur (17) est actionnable à distance par des signaux provenant d'un émetteur radio.

5. Montant (11) selon la revendication 1, dans lequel ladite unité de base (22) comprend une portion de bride centrale (39) encerclant annulairement le corps dudit montant (11) au-dessus de ladite unité de base (22), un logement interne (41) recevant ladite batterie électrique (40) et des moyens d'ancrage (42) pour fixation au sol.

6. Montant (11) selon la revendication 1, dans lequel ledit cadre d'unité solaire (25) peut tourner autour de sa base dans la fente de soutien (32) dans laquelle ledit cadre d'unité solaire (25) est logé, de telle sorte que la surface externe inclinée dudit panneau solaire (23) est positionnable pour être orientée vers une certaine direction.

7. Montant (11) selon la revendication 2, dans lequel ledit profilé longitudinalement creux (29) présente une géométrie fermée dans laquelle ledit moteur électrique (17) est installé à demeure, de telle sorte qu'un logement central (21) situé immédiatement au-dessus dudit profilé longitudinalement creux (29) contient ledit mécanisme de poulie (18).

8. Montant (11) selon la revendication 7, dans lequel lesdits moyens d'éclairage sont des DEL embarquées au sein dudit logement central (21).

9. Montant (11) selon la revendication 5, dans lequel lesdits moyens d'ancrage (42) dudit montant (11) destinés à retenir celui-ci sont dissimulés par ladite unité de base (22), ladite unité de base (22) comprenant un couvercle verrouillable (28) qui empêche les intrus de voir lesdits moyens d'ancrage (42).

10. Montant (11) selon la revendication 1, dans lequel ladite unité de base (22) est munie de roulettes pour permettre un déplacement facile.
